# EUROPEAN PATENT SPECIFICATION

(11) **EP 4 201 912 B1**
(45) Date of publication and mention of the grant of the patent: **06.03.2024**
(21) Application number: 21218271.1
(22) Date of filing: 30.12.2021
(51) Int. Cl.: C04B 28/14, F26B 17/00, C04B 28/04, B32B 1/08, F27B 1/00, C04B 111/28

(54) **CONCRETE STRUCTURE, TRANSPORT MODULE FOR GRANULAR MATERIALS THAT CONTAIN THIS STRUCTURE AND SYSTEM FOR DRYING, DISAGGREGATION AND CLEANING OF THESE MATERIALS**
BETONSTRUKTUR, TRANSPORTMODUL FÜR KÖRNIGE MATERIALIEN, WELCHE DIESE STRUKTUR ENTHÄLT, UND SYSTEM ZUM TROCKNEN, AUFLOCKERUNG UND REINIGUNG DIESER MATERIALIEN
STRUCTURE EN BETON, MODULE DE TRANSPORT DE MATERIAUX GRANULAIRES CONTENANT CETTE STRUCTURE ET SYSTEME DE SECHAGE, DESAGREGATION ET NETTOYAGE DE CES MATERIAUX

(30) Priority: 27.12.2021 PT 2021117689
(43) Date of publication of application: 28.06.2023
(73) Proprietor: Secil-Companhia Geral de Cal e Cimento, S.A., 1070-100 Lisboa (PT)
(72) Inventor: JESUS DE SEQUEIRA NUNES, Ângela Maria, 2925-181 AZEITÃO (PT); AIRES VERMELHUDO, Vitor Manuel, 2810-073 LARANJERO (PT); PIRES DOS SANTOS MATEUS, Maria Margarida, 2720-428 DAMAIA (PT)
(74) Representative: do Nascimento Gomes, Rui

(56) References cited:
- WO-A1-2012/101193
- WO-A1-2018/111737
- CN-A- 101 805 160
- CN-A- 103 277 988
- CN-A- 108 658 488
- CN-A- 109 053 118
- CN-A- 111 116 150
- CN-A- 112 500 069
- US-A1- 2020 331 802

## Description

### FIELD OF THE INVENTION

The present disclosure is enclosed within the technical field of systems for drying, disaggregating and cleaning granular materials.

### PRIOR ART

Currently, the drying of materials is carried out in industrial dryers based on fossil fuels.

There are several technologies or systems for this purpose, namely the one described in EP1995223A1, which discloses a system, process and method for converting coal power plants to co-generate a sustainable cement. This cogeneration simultaneously allows the production of electricity and cement. Indeed, that document discloses a process in which cement becomes a by-product produced by polymerization to produce electricity.

The document US2014174080 discloses a system for converting, processing, extracting and/or storing electrical, chemical and thermal energy, but the possible applicability of said system in drying and transporting granular materials is not addressed.

On the other hand, the most efficient drying systems for granular materials traditionally use convection energy by exposure to hot air with forced or natural ventilation, as they are more efficient.

The solar thermal systems adopted until today in drying processes are normally stationary systems that use irradiation, having, therefore, the inconvenience of being slow and occupying large areas when they involve large volumes to be treated, being, therefore, inefficient equipment. Documents CN 103277988A, CN104011490A and CN2038334702U disclose drying processes for granular materials, however, they do not solve one of the most important problems for this type of use, which is drying by a continuous process using solar energy, being, therefore, a batch system that it works only in sunny hours. Given the current state of the art, an eventual continuous use of these drying systems implies the use of fossil fuels.

CN109053118 A discloses a composition based on a binder comprising Portland cement, fly ash and calcium sulfate, which is used for producing a high strength prefabricated concrete board for construction applications.

The present disclosure presents an improved solution in relation to the state of the art.

### SUMMARY OF THE INVENTION

The present disclosure generally consists of a tunnel-like concrete structure, a module for transporting granular materials and a system for continuous drying, disaggregation and cleaning of granular materials, using, for example, renewable energy sources, namely solar energy.

As the drying process of granular materials is very energy-consuming (in the order of 2250KJ/kg material), and considering the extraordinary volumes of materials that are processed annually, the objects of this disclosure will allow to achieve an important economy of fossil fuels, avoiding high volumes of greenhouse gas emissions.

For this purpose, it is proposed a heat accumulation mechanism from the circulation of a thermal fluid, heated by the action of an energy unit, for example a concentrated solar energy system, in a concrete structure with high thermal capacity, duly isolated from the outside.

The thermal fluid heated by the energy unit will feed a heat exchanger, which will enable the thermal exchange between the thermal fluid and the air, resulting in the heating of the latter. This hot air is forced to circulate through the interior of the module for transporting granular materials, in particular through the tunnel-type concrete structure that it includes, getting involved with the granular material to be treated, thus causing its drying and subsequent disaggregation and cleaning.

It is thus a first object of the present disclosure, a concrete structure comprising the following composition in percentage by weight of components relative to the total weight of the composition:
- Portland cement - 5 to 40%;
- Fly Ash and/or Pozzolans - 5 to 40%;
- Calcium sulphate - 0.1 to 15%;
- Silica and/or dolomitic/basalt sand - 15 to 40%;
- Dolomitic and/or basaltic gravel - 25 to 60%;
- Rubber Agglomerate and/or Cork Agglomerate and/or Rubber Waste and/or Cork Waste - 1 to 15%;
- Steel fibers and/or carbon fiber - 0.1 to 5%;
- Superplasticizer - 0.1 to 3%.

This specific composition for the concrete structure endows it with a high thermal capacity - greater than 0.9 kJ/KgK and, preferably, 1.4 kJ/kgK -which allows the necessary heat storage for the continuous operation of the drying system that includes it, both at night and in periods of low solar emission. The aforementioned concrete structure, result of its specific composition, also has a high resistance to heat, allowing it to reach working temperatures between 100°C and 500°C. Its dimensioning, in terms of section and length, will depend on the heat storage needs required for the foreseen production.

The second object of the present disclosure concerns a module for transporting granular materials. This comprises the concrete structure of the first object of this disclosure, which presents a tunnel-like structural configuration, and which involves, at least partially, a transport section where the granular materials are arranged for drying purposes.

Finally, the third object of this disclosure is a system for drying, disaggregating and cleaning granular materials that comprises the module for transporting granular materials of the second object of this disclosure, which includes the concrete structure that is the first object of this disclosure. The system further comprises an energy unit and a heat exchanger, among other elements, which will be described in detail below.

### DESCRIPTION OF FIGURES

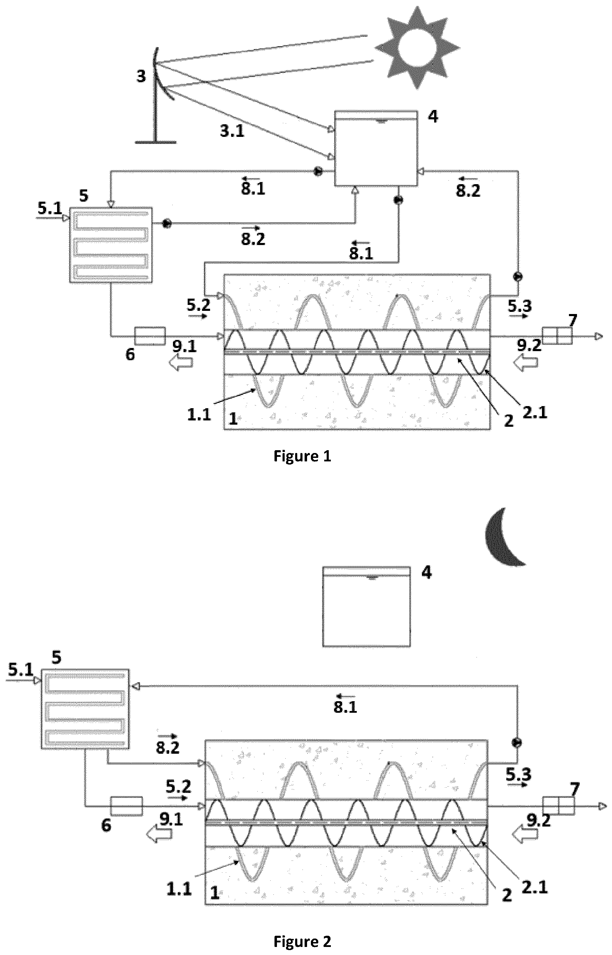

Figure 1 - representation of an embodiment of the drying, disaggregation and cleaning system of the present disclosure, and its operation scheme during the day-time. Numeric reference signs represent:
   1 - Concrete structure (tunnel type) of the transportation module;
   1.1 - pipes for thermal fluid circulation, embedded in the concrete structure.
   2 - transport section of the transport module;
   2.1 - open blade worm screw;
   3 - energy unit, in the form of concentrated solar energy system;
   3.1 - solar radiation;
   4 - reservoir for storage of thermal fluid;
   5 - heat exchanger;
   5.1 - Inlet air in the exchanger;
   5.2 - Hot air, exiting the exchanger;
   5.3 - Moist air, exiting the transport module;
   6 - ventilation unit;
   7 - bag filter;
   8.1 - hot thermal fluid;
   8.2 - cold thermal fluid;
   9.1 - dry granular materials;
   9.2 - wet granular materials.
Figure 2 - representation of an embodiment of the drying, disaggregation and cleaning system of the present disclosure, and its operation scheme during the night-time. Numeric reference signs represent:
   1 - Concrete structure (tunnel type) of the transportation module;
   1.1 - pipes for thermal fluid circulation, embedded in the concrete structure.
   2 - transport section of the transport module;
   2.1 - open blade worm screw;
   3 - energy unit, in the form of concentrated solar energy system;
   3.1 - solar radiation;
   4 - reservoir for storage of thermal fluid;
   5 - heat exchanger;
   5.1 - Inlet air in the exchanger;
   5.2 - Hot air, exiting the exchanger;
   5.3 - Moist air, exiting the transport module;
   6 - ventilation unit;
   7 - bag filter;
   8.1 - hot thermal fluid;
   8.2 - cold thermal fluid;
   9.1 - dry granular materials;
   9.2 - wet granular materials.

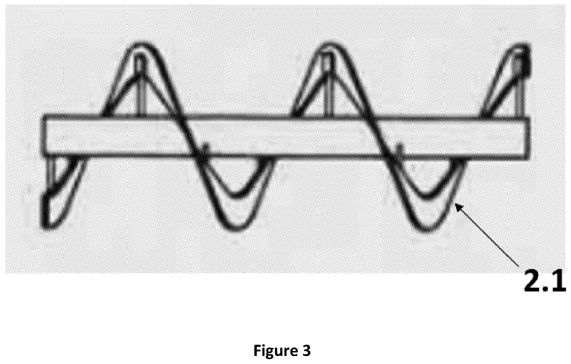

Figure 3 - representation of the open blade worm screw (2.1) of the transport section.

### DETAILED DESCRIPTION

The more general and advantageous configurations of the present invention are described in the Summary of the invention. Such configurations are detailed below in accordance with other advantageous and/or preferred embodiments of implementation of the present invention.

The objective of the present disclosure is to obtain a continuous drying process of granular materials, with a variable particle size (0 to 100mm). By continuous process, in the context of the present disclosure, it should be understood that the described drying system will have the capacity to operate, without interruption, during the day and night periods. For this purpose, the system comprises a module for transporting granular materials that includes a concrete structure with a specific composition that provides it with a high thermal capacity and heat resistance.

Using a heat source generated by an energy unit, a thermal fluid is heated, such as thermal oil, molten salts or steam, which will circulate through the concrete structure, heating it, as well as by a heat exchanger, where air streams will be heated. This hot air is then forwarded to the module for transporting granular materials, which comprises said concrete structure in a tunnel form, circulating in counter-current to the transport of the material to be dried, optimizing the drying efficiency by the convection/evaporation currents thus generated. At night, the concrete structure, due to its high thermal capacity, manages to accumulate a sufficient amount of heat to ensure the functioning of the system. In fact, through the recirculation of the thermal fluid through the concrete structure, the fluid temperatures are maintained at levels that ensure sufficient heat to produce the hot air in the exchanger, necessary to continue the process in operation.

In a preferred aspect of this disclosure, the continuous process is obtained using renewable energy sources, namely solar thermal energy. In particular, the energy unit may be a concentrated solar energy system known from the state of the art and which may comprise, for example, solar panel structures, fresnel lenses or solar towers, among other elements. This unit will be dimensioned for the energy needs of the drying system.

In case the thermal energy produced is not sufficient to reach the necessary temperatures, either during the day or at night, a complementary heating system for the thermal fluid can be used.

### EMBODIMENTS

The present disclosure then concerns a system for drying, disaggregating and cleaning granular materials, its respective transport module which, in turn, comprises a concrete structure with specific properties for the purpose.

In a preferred aspect of the present disclosure, the concrete structure comprises the following composition, in percentage by weight of components relative to the total weight of the composition:
- Portland cement - 5 to 40%;
- Fly Ash and/or Pozzolans - 5 to 40%;
- Calcium sulphate - 0.1 to 15%;
- Silica and/or dolomitic/basalt sand - 15 to 40%;
- Dolomitic and/or basaltic gravel - 25 to 60%;
- Rubber Agglomerate and/or Cork Agglomerate and/or Rubber Waste and/or Cork Waste - 1 to 15%;
- Steel fibers and/or carbon fiber - 0.1 to 5%;
- Superplasticizer - 0.1 to 3%.

As already mentioned, this specific composition endows the concrete structure with a high thermal capacity - greater than 0.9 kJ/KgK and, preferably, 1.4 kJ/kgK - which allows the storage of heat necessary for the continuous operation of the drying system that includes it, both at night and in periods of low solar emission. The aforementioned concrete structure, result of its specific composition, also has a high resistance to heat, allowing it to reach working temperatures between 100°C and 500°C.

In an embodiment of the concrete structure, this comprises at least one pipe embedded in said structure, which is adapted to the circulation of the thermal fluid. In another embodiment of the concrete structure, the pipes embedded in said structure may have a star-shaped profile. In this way, it is possible to maximize the thermal transfer between the thermal fluid/piping/concrete structure. Optionally, the material in which the pipes are made is steel.

In another embodiment of the concrete structure, the superplasticizer that is used in its composition is one or a combination of the following elements: polycarboxylate, melment, gluconates and naphthalenes.

In another embodiment of the concrete structure, this comprises an insulating layer that covers its outer surface. In this way, the conservation of the heat necessary for the continuous operation of the system is ensured. In another embodiment of the concrete structure, the insulating layer is composed of rock wool and/or black cork agglomerate and/or lightweight concrete, or another insulating material that can withstand the necessary working temperatures. Even more particularly, in another embodiment of the concrete structure, the insulating layer is made of lightweight concrete, comprising the following composition in percentage by weight of components relative to the total weight of the composition:
- Portland cement - 20 to 70%;
- Flying Ash and/or Pozzolans - 10 to 40%;
- Basalt, dolimitic or siliceous sands - 10 to 50%
- Dolomitic and/or basaltic gravel - 2 to 45%;
- Expanded polystyrene - 2 to 20%;
- Vinyl acetate copolymers - 0.2 to 5%;
- Superplasticizer - 0.1 to 5%.

The use of an insulating layer in lightweight concrete favors the adherence of this insulating layer to the concrete structure. In fact, the natural adhesion between the two materials (concrete and lightweight concrete) ensures a more homogeneous coating, and consequently a more homogeneous and lasting thermal protection, avoiding glues or fixings which, at high temperatures as in this case, are always weak stitches.

Regarding the module for transporting granular materials, in a preferred embodiment this comprises the disclosed concrete structure which, for the intended purposes, acquires a tunnel-like shape, to thus at least partially enclose a transport section where the granular materials to be dried are positioned.

In an embodiment of the module, the transport section comprises an open-blade worm screw, which promotes the dragging/transport of the granular materials to be dried along the tunnel-shaped concrete structure. This configuration in open blades makes the worm screw permeable to the hot air that circulates inside the tunnel-type concrete structure, allowing the generation of convection currents and the effective involvement of the hot air particles which, due to the convection effect/ evaporation, will dry the material, as well as promote its breakdown and cleaning. The pitch and radius of the screw are dimensioned according to the desired productions.

As for the system for drying, disaggregating and cleaning granular materials, in a preferred embodiment this comprises the disclosed module for transporting granular material.

More specifically, in an embodiment of the system it additionally comprises:
- an energy unit, configured to generate thermal energy and heat a thermal fluid from the generated thermal energy;
- a reservoir for storage of thermal fluid;
- a heat exchanger adapted to generate hot air from thermal fluid;
- a ventilation unit adapted to direct the hot air generated by the heat exchanger to the module for transporting granular materials, in particular to the interior of the tunnel-type concrete structure;
- at least two pumping circuits, wherein a first pumping circuit is configured to circulate the thermal fluid between the reservoir, the heat exchanger and at least one piping embedded in the concrete structure of the transport module; and a second pumping circuit configured to circulate the thermal fluid between the heat exchanger and the at least one piping embedded in the concrete structure of the module for transporting granular materials.

In one embodiment of the system the energy unit is a concentrated solar power system, and in which the first pumping circuit is operable during the day-time and the second pumping circuit is operable during the night-time. More particularly, in the first pumping circuit, the heated thermal fluid coming from the energy unit - which will be between 300°C and 500°C - is directed to the reservoir that distributes the circulation of the same through the heat exchanger, which will use it to heat the air that enters the module for transporting the granular materials, and through the piping circuit built into the interior of the concrete structure and which promotes the heating of the material in this period (day-time) for heat storage to be used in the period night. A new cycle then begins, with the thermal fluid returning to the energy unit to be reheated, before being sent back to the reservoir, which will make it recirculate through the exchanger and through the concrete structure of the module for transporting granular materials. In turn, in the second pumping circuit, the energy unit is bypassed, and the recirculation of the thermal fluid is only carried out between the exchanger and the concrete structure.

In an embodiment of the system, it further comprises a control module comprising sensor means and actuation means. The sensor means are configured to monitor the moisture level of the granular materials inside the module for transporting granular materials and the level of thermal energy generated by the energy unit. In turn, the actuation means are configured to carry out the recirculation of the granular materials to be dried inside the transport module, if the levels of moisture and/or thermal energy are below a pre-defined threshold level. In an exemplary embodiment, the actuation means could force the granular materials back through the transport module through an auxiliary recirculation circuit. This procedure can be repeated as many times as necessary, while the moisture levels remains high or while the solar power is insufficient to meet the needs of the volumes to be treated.

In one embodiment of the system, and to satisfy under-dimensioning scenarios as well as specific usage situations, it additionally comprises an Organic Rankine cycle heat recovery system, which will be used to heat the thermal fluid. In particular, the Organic Rankine cycle heat recovery system may be programmed by the control module to heat the thermal fluid when the level of thermal energy generated by the energy unit is below a pre-defined threshold level.

In one embodiment of the system, the module for transporting granular materials is configured to transport the granular material in counter-current to the hot air generated by the heat exchangerwhich is routed by the ventilation unit. In particular, the use of an open-blade worm screw to transport the granular materials against the hot air generated by the exchanger, allows to achieve an optimization in the drying efficiency, through the convection/evaporation currents that are generated. The transport of hot air through the tunnel-shaped concrete structure of the transport module is carried out by the ventilation unit. In an alternative embodiment, the system additionally comprises a bag filter or an electrofilter in order to remove particles or suspended dust resulting from drying and consequent breakdown of the granular material.

### EXAMPLE OF REALIZATION

Installation for drying granular material for around 1.5 ton/hour for H₂O contents between 2 and 15%, maximum admissible temperature for concrete (example 1 - 250°C); the system comprises:
- Energy unit composed of a concentrated solar energy system, configured for a power above 400kW; a reservoir for thermal fluid storage; a heat exchanger and a ventilation unit for producing and routing hot air.
- Concrete drying tunnel, with the specific composition according to the first object of this disclosure, with dual function of energy storage and dryer, with dimensions of 3×3m² with an interior hole of 1.2 m in diameter for passage of the granular material to dry, and total length about 10m.
- The concrete structure has a built-in piping circuit for the passage of thermal fluid that will promote its heating; the thermal fluid will return to the energy unit for day-time reheating (first pumping circuit). At night, the energy unit will be bypassed, with direct circulation between the concrete structure and the exchanger (second pumping circuit).
- The outer casing of the concrete structure is thermally insulated with rock wool/black cork agglomerate in order to minimize thermal losses from storage.
- An open-blade worm screw circulates inside the concrete structure of the transport module, which transports the material in counter-current to the air heated by the system.
- Possibility of having an exhaust and filtration system with return to the exchanger;
- Recirculation of material in case of need or transport to ensilage.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Concrete structure **characterized by** comprising the following composition in percentage by weight of components relative to the total weight of the composition:
- Portland cement - 5 to 40%;
- Fly Ash and/or Pozzolans - 5 to 40%;
- Calcium sulphate - 0.1 to 15%;
- Silica and/or dolomitic/basalt sand - 15 to 40%;
- Dolomitic and/or basaltic gravel - 25 to 60%;
- Rubber Agglomerate and/or Cork Agglomerate and/or Rubber Waste and/or Cork Waste -1 to 15%;
- Steel fibers and/or carbon fiber - 0.1 to 5%;
- Superplasticizer - 0.1 to 3%.

2. Concrete structure according to claim 1, comprising at least one pipe adapted to the circulation of a thermal fluid; said at least one pipe being embedded in the concrete structure.

3. Concrete structure according to claim 2, wherein the pipe has a star-shaped profile.

4. Concrete structure according to any of the preceding claims, comprising an insulating layer covering its outer surface; optionally
the superplasticizer is one or a combination of the following elements: polycarboxylate, melment, gluconates and naphthalenes.

5. Concrete structure according to claim 4, in which the insulating layer is composed of rock wool and/or black cork agglomerate and/or lightweight concrete.

6. Concrete structure according to claim 5, wherein the lightweight concrete comprises the following composition in percentage by weight of components relative to the total weight of the composition:
- Portland cement - 20 to 70%;
- Fly Ash and/or Pozzolans - 10 to 40%;
- Basalt, dolomitic or siliceous sands - 10 to 50%
- Dolomitic and/or basaltic gravel - 2 to 45%;
- Expanded polystyrene - 2 to 20%;
- Vinyl acetate copolymers - 0.2 to 5%;
- Superplasticizer - 0.1 to 5%.

7. A module for transporting granular materials comprising a transport section and the concrete structure according to any of claims 1 to 6; the concrete structure being of the tunnel type in order to at least partially enclose the transport section.

8. The module according to claim 7, wherein the transport section comprises an open-blade worm screw.

9. System for drying, disaggregation and cleaning of granular materials, **characterized in that** it comprises the module for transporting granular materials according to claim 7 or 8.

10. System according to claim 9, **characterized in that** it further comprises:
- an energy unit, configured to generate thermal energy and heat a thermal fluid from the generated thermal energy;
- a reservoir for storage of thermal fluid;
- a heat exchanger adapted to generate hot air from thermal fluid;
- a ventilation unit adapted to direct the hot air generated by the heat exchanger to the module for transporting granular materials;
- at least two pumping circuits;
wherein,
A first pumping circuit is configured to circulate the thermal fluid between the reservoir, the heat exchanger and at least one piping embedded in the concrete structure of the module for transporting granular materials;
A second pumping circuit is configured to circulate the thermal fluid between the heat exchanger and the at least one piping embedded in the concrete structure of the module for transporting granular materials.

11. System according to claim 10, wherein the energy unit is a concentrated solar power system; and wherein,
the first pumping circuit is operable during day-time; and
the second pumping circuit is operable during night-time.

12. System according to claims 10 or 11, further comprising a control module comprising sensor means configured to monitor:
- the moisture level of the granular materials inside the module for transporting granular materials;
- the level of thermal energy generated by the energy unit;
the control module further comprising actuation means configured to:
- recirculate the granular materials inside the module for transporting granular materials if the moisture and/or thermal energy levels are below a pre-defined threshold level.

13. System according to claims 11 and 12, further comprising a Rankine Organic cycle heat recovery system configured to heat the thermal fluid; optionally, said system is configured to heat the thermal fluid when the level of thermal energy generated by the energy unit is below a predefined threshold level.

14. A system as claimed in any one of claims 9 to 13, wherein the module for transporting granular materials is configured to transport the granular materials in counter-current to the hot air generated by the heat exchanger which is routed by the ventilation unit; optionally, the system additionally comprises a bag filter or an electrofilter.

15. Use of the system of claim 13 in a system for the reuse of excess air from a clinker cooler.

## Patentansprüche

1. Betonstruktur, **dadurch gekennzeichnet, dass** sie die folgende Zusammensetzung in Gewichtsprozent der Komponenten, bezogen auf das Gesamtgewicht der Zusammensetzung, umfasst:
- Portlandzement - 5 bis 40 %;
- Flugasche und/oder Puzzolane - 5 bis 40 %;
- Calciumsulfat - 0,1 bis 15%;
- Kiesel- und/oder Dolomit-/Basaltsand - 15 bis 40 %;
- Dolomit- und/oder Basaltschotter - 25 bis 60 %;
- Gummi-Agglomerat und/oder Kork-Agglomerat und/oder Gummiabfälle und/oder Korkabfälle - 1 bis 15 %;
- Stahlfasern und/oder Kohlenstofffasern - 0,1 bis 5 %;
- Fließmittel - 0,1 bis 3%.

2. Betonstruktur nach Anspruch 1, die mindestens ein Rohr für die Zirkulation eines Thermofluids umfasst, wobei das mindestens eine Rohr in die Betonstruktur eingebettet ist.

3. Betonbauwerk nach Anspruch 2, wobei das Rohr ein sternförmiges Profil aufweist.

4. Betonstruktur nach einem der vorhergehenden Ansprüche, mit einer Isolierschicht, die ihre Außenfläche bedeckt; gegebenenfalls
das Fließmittel ist eines oder eine Kombination der folgenden Elemente: Polycarboxylat, Melment, Gluconate und Naphthaline.

5. Betonkonstruktion nach Anspruch 4, bei der die Isolierschicht aus Steinwolle und/oder schwarzem Korkagglomerat und/oder Leichtbeton besteht.

6. Betonstruktur nach Anspruch 5, wobei der Leichtbeton die folgende Zusammensetzung in Gewichtsprozent der Komponenten, bezogen auf das Gesamtgewicht der Zusammensetzung, umfasst:
- Portlandzement - 20 bis 70 %;
- Flugasche und/oder Puzzolane -10 bis 40 %;
- Basalt-, Dolomit- oder Kieselsande - 10 bis 50%
- Dolomit- und/oder Basaltschotter - 2 bis 45 %;
- Expandiertes Polystyrol - 2 bis 20%;
- Vinylacetat-Copolymere - 0,2 bis 5%;
- Fließmittel - 0,1 bis 5%.

7. Modul zum Transportieren von körnigen Materialien, das einen Transportabschnitt und die Betonstruktur nach einem der Ansprüche 1 bis 6 umfasst, wobei die Betonstruktur vom Typ Tunnel ist, um den Transportabschnitt zumindest teilweise zu umschließen.

8. Modul nach Anspruch 7, wobei der Transportabschnitt eine Schnecke mit offenen Flügeln umfasst.

9. System zum Trocknen, Disaggregation und Reinigen von körnigen Materialien, **dadurch gekennzeichnet, dass** es das Modul zum Transportieren von körnigen Materialien nach Anspruch 7 oder 8 umfasst.

10. System nach Anspruch 9, **dadurch gekennzeichnet, dass** es ferner umfasst:
- eine Energieeinheit, die so konfiguriert ist, dass sie thermische Energie erzeugt und ein Thermofluid aus der erzeugten thermischen Energie erhitzt;
- ein Reservoir für die Speicherung von Thermofluid;
- ein Wärmetauscher, der dazu geeignet ist, Heißluft aus Thermoflüssigkeit zu erzeugen;
- eine Lüftungsgerät, die dazu geeignet ist, die vom Wärmetauscher erzeugte Heißluft zum Modul für den Transport körniger Materialien zu leiten;
- mindestens zwei Pumpenkreisläufe;
wobei,
Ein erster Pumpenkreislauf ist so konfiguriert, dass das Thermofluid zwischen dem Reservoir, dem Wärmetauscher und mindestens einer in die Betonstruktur des Moduls eingebetteten Rohrleitung zum Transportieren von körnigen Materialien zirkuliert;
Ein zweiter Pumpenkreislauf ist so konfiguriert, dass das Thermofluid zwischen dem Wärmetauscher und der mindestens einen in die Betonstruktur des Moduls eingebetteten Rohrleitung zum Transportieren von körnigen Materialien zirkuliert.

11. System nach Anspruch 10, wobei die Energieeinheit ein konzentriertes Solarenergiesystem ist; und wobei,
der erste Pumpenkreislauf ist tagsüber in Betrieb; und
der zweite Pumpenkreislauf ist während der Nacht in Betrieb.

12. System nach Anspruch 10 oder 11, ferner mit einem Steuermodul, das Sensormittel umfasst, die konfiguriert sind, um Folgendes zu überwachen:
- den Feuchtigkeitsgehalt der körnigen Materialien im Inneren des Moduls zum Transportieren von körnigen Materialien;
- die Höhe der von der Energieeinheit erzeugten Wärmeenergie;
das Steuermodul umfasst ferner Betätigungsmittel, die so konfiguriert sind, dass sie:
- die körnigen Materialien innerhalb des Moduls zum Transportieren von körnigen Materialien zu rezirkulieren, wenn der Feuchtigkeitsgehalt und/oder die Wärmeenergie unter einem vordefinierten Schwellenwert liegen.

13. System nach den Ansprüchen 11 und 12, das ferner ein Wärmerückgewinnungssystem des organischen Rankine-Zyklus umfasst, das so konfiguriert ist, dass es das Thermofluid erwärmt; optional ist das System so konfiguriert, dass es das Thermofluid erwärmt, wenn die Höhe der von der Energieeinheit erzeugten thermischen Energie unter einem vordefinierten Schwellenwert liegt.

14. System nach einem der Ansprüche 9 bis 13, wobei das Modul zum Transportieren von körnigen Materialien so konfiguriert ist, dass es die körnigen Materialien im Gegenstrom zu der von dem Wärmetauscher erzeugten Heißluft transportiert, die von der Lüftungsgerät geleitet wird; optional umfasst das System zusätzlich einen Schlauchfilter oder einen Elektrofilter.

15. Verwendung des Systems nach Anspruch 13 in einem System zur Wiederverwendung von überschüssiger Luft aus einem Klinkerkühler.

## Revendications

1. Structure en béton **caractérisée en ce qu'**elle comprend la composition suivante en pourcentage en poids des composants par rapport au poids total de la composition :
- Ciment Portland - 5 à 40% ;
- Cendres volantes et/ou pouzzolanes - 5 à 40% ;
- Sulfate de calcium - 0,1 à 15% ;
- Sable siliceux et/ou dolomitique/basaltique -15 à 40% ;
- Gravier dolomitique et/ou basaltique - 25 à 60% ;
- Aggloméré de caoutchouc et/ou aggloméré de liège et/ou déchets de caoutchouc et/ou déchets de liège - 1 à 15% ;
- Fibres d'acier et/ou de carbone - 0,1 à 5% ;
- Superplastifiant - 0,1 à 3%.

2. Structure en béton selon la revendication 1, comprenant au moins un tuyau adapté à la circulation d'un fluide thermique ; ledit au moins un tuyau étant intégré dans la structure en béton.

3. Structure en béton selon la revendication 2, dans laquelle le tuyau a un profil en forme d'étoile.

4. Structure en béton selon l'une quelconque des revendications précédentes, comprenant une couche isolante recouvrant sa surface extérieure ; facultativement
le superplastifiant est l'un des éléments suivants ou une combinaison de ceux-ci : polycarboxylate, melment, gluconates et naphtalènes.

5. Structure en béton selon la revendication 4, dans laquelle la couche isolante est composée de laine de roche et/ou d'aggloméré de liège noir et/ou de béton léger.

6. Structure en béton selon la revendication 5, dans laquelle le béton léger comprend la composition suivante en pourcentage en poids des composants par rapport au poids total de la composition :
- Ciment Portland - 20 à 70% ;
- Cendres volantes et/ou pouzzolanes - 10 à 40% ;
- Sables basaltiques, dolomitiques ou siliceux - 10 à 50% ;
- Gravier dolomitique et/ou basaltique - 2 à 45% ;
- Polystyrène expansé - 2 à 20% ;
- Copolymères d'acétate de vinyle - 0,2 à 5% ;
- Superplastifiant - 0,1 à 5%.

7. Module de transport de matériaux granulaires comprenant une section de transport et la structure en béton selon l'une quelconque des revendications 1 à 6 ; la structure en béton étant du type tunnel afin d'entourer au moins partiellement la section de transport.

8. Module selon la revendication 7, dans lequel la section de transport comprend une vis sans fin à lame ouverte.

9. Système de séchage, de désagrégation et de nettoyage de matériaux granulaires, **caractérisé en ce qu'**il comprend le module de transport de matériaux granulaires selon la revendication 7 ou 8.

10. Système selon la revendication 9, **caractérisé en ce qu'**il comprend en outre :
- une unité énergétique, configurée pour générer de l'énergie thermique et chauffer un fluide thermique à partir de l'énergie thermique générée ;
- un réservoir pour le stockage d'un fluide thermique ;
- un échangeur de chaleur adapté pour générer de l'air chaud à partir d'un fluide thermique ;
- une unité de ventilation adaptée pour diriger l'air chaud généré par l'échangeur de chaleur vers le module de transport de matériaux granulaires ;
- au moins deux circuits de pompage ;
dans lequel,
Un premier circuit de pompage est configuré pour faire circuler le fluide thermique entre le réservoir, l'échangeur de chaleur et au moins une tuyauterie intégrée dans la structure en béton du module de transport de matériaux granulaires ;
Un deuxième circuit de pompage est configuré pour faire circuler le fluide thermique entre l'échangeur de chaleur et au moins une tuyauterie intégrée dans la structure en béton du module de transport de matériaux granulaires.

11. Système selon la revendication 10, dans lequel l'unité énergétique est un système d'énergie solaire concentrée ; et dans lequel
le premier circuit de pompage fonctionne pendant la journée ; et
le deuxième circuit de pompage fonctionne pendant la nuit.

12. Système selon les revendications 10 ou 11, comprenant en outre un module de commande comprenant des moyens de détection configurés pour surveiller :
- le niveau d'humidité des matériaux granulaires à l'intérieur du module de transport de matériaux granulaires ;
- le niveau d'énergie thermique générée par l'unité énergétique ;
le module de commande comprend en outre des moyens d'actionnement configurés pour :
- recirculer les matériaux granulaires à l'intérieur du module de transport de matériaux granulaires si les niveaux d'humidité et/ou d'énergie thermique sont inférieurs à un niveau-seuil prédéfini.

13. Système selon les revendications 11 et 12, comprenant en outre un système de récupération de chaleur à cycle organique de Rankine configuré pour chauffer le fluide thermique ; facultativement, ledit système est configuré pour chauffer le fluide thermique lorsque le niveau d'énergie thermique générée par l'unité d'énergie est inférieur à un niveau-seuil prédéfini.

14. Système selon l'une quelconque des revendications 9 à 13, dans lequel le module de transport de matériaux granulaires est configuré pour transporter les matériaux granulaires à contre-courant de l'air chaud généré par l'échangeur de chaleur qui est acheminé par l'unité de ventilation ; facultativement, le système comprend en outre un filtre à manches ou un électrofiltre.

15. Utilisation du système de la revendication 13 dans un système de réutilisation de l'air excédentaire d'un refroidisseur de clinker.
